Europäisches Patentamt

European Patent Office

Office européen des brevets

(11) Veröffentlichungsnummer: **0 061 072**

A2

## (12) EUROPÄISCHE PATENTANMELDUNG

(21) Anmeldenummer: **82101924.7**

(22) Anmeldetag: **11.03.82**

(51) Int. Cl.³: **B 29 F 1/022**
**B 29 F 1/14**

(30) Priorität: 21.03.81 DE 3111216
21.03.81 DE 3111254

(43) Veröffentlichungstag der Anmeldung:
29.09.82 Patentblatt 82/39

(84) Benannte Vertragsstaaten:
DE FR GB IT NL

(71) Anmelder: Maschinenfabrik Köppern GmbH. & Co. KG
Königsteiner Strasse 2-12
D-4320 Hattingen 1(DE)

(72) Erfinder: Blank, Michael
Am Hochsitz 27
D-5600 Wuppertal 1(DE)

(72) Erfinder: Hammerschmidt, Horst
Am Schamberg 8
D-4320 Hattingen(DE)

(74) Vertreter: Gralfs, Harro, Dipl.-Ing.
Am Bürgerpark 8
D-3300 Braunschweig(DE)

(54) Spritzgiessform.

(57) Spritzgießform für kastenförmige Spritzlinge, insbesondere Flaschenkästen, bei der die in der Schließstellung an den Ecken unter dem halben Eckenwinkel gegeneinanderstoßenden Formbacken auf schrägen Führungssäulen verschiebbar sind, von denen jeweils eine in der Ebene der Stoßfuge zweier benachbarter Formbacken um einen sich aus den Bewegungswinkeln der Formbacken ergebenden resultierenden Winkel geneigt angeordnet ist. Auf den Führungssäulen ist jeweils ein Mitnehmer geführt, der mit den Formbacken in Eingriff steht. Der Mitnehmer weist seitliche Führungsnasen auf, die in senkrechte Nuten in den Stirnseiten der Formbacken eingreifen, die sich senkrecht zur Neigungsebene der Führungssäule erstrecken. Der Auswerferrahmen ist dabei von wenigstens zwei Führungssäulen durchdrungen, die in einer der beiden Formhälften befestigt sind und mit denen diese relativ zur anderen Formhälfte in Öffnungsrichtung geführt sind. Auf den Führungssäulen ist jeweils eine axial frei verschiebbare Buchse gelagert, auf der der Führungsrahmen und der andere Formteil axial verschiebbar gelagert und radial geführt sind. Die Buchse ist mit Anschlägen versehen, deren wirksamer Abstand so gewählt ist, daß der Auswerferrahmen beim Öffnen der Form mitgenommen wird, sobald eine für das Auswerfen des Spritzlings erforderliche Öffnungsweite erreicht ist.

FIG.3

Croydon Printing Company Ltd.

Maschinenfabrik
Köppern GmbH & Co. KG
Königsteiner Str. 2-12

4320 Hattingen

Bundesrepublik Deutschland

Spritzgießform

Die Erfindung bezieht sich auf eine Spritzgießform für kastenförmige Spritzlinge, insbesondere Flaschenkästen, bei der die äußere Kontur der Spritzlinge formende Formbacken auf schrägen Führungssäulen, die an einer Formplatte angeordnet sind, verschiebbar geführt sind und bei der jeweils zwei benachbarte Formbacken in der Schließstellung an ihren benachbarten Ecken unter dem halben Eckenwinkel längs einer Dichtfläche aneinander anliegen.

Bei Spritzgießformen der genannten Art ist es üblich, die Formbacken jeweils auf zwei Führungssäulen zu führen, die im allgemeinen unter einem Winkel von 30$^\circ$ geneigt sind. Diese Führungssäulen durchdringen die Formbacken im Abstand von den Backenenden. Diese Anordnung der Führungssäulen führt vielfach zu Schwierigkeiten hinsichtlich der Anlage der Kühlbohrungen. Es ist darüber hinaus notwendig, die Bohrungen für die Führungssäulen im zusammengebauten Zustand der Form auf einem Bohrwerk vorzunehmen.

Aufgabe der Erfindung ist es, eine Spritzgießform der genannten Art zu schaffen, bei der die Kühlbohrungen in den Formbacken besser optimiert werden können als bei den bekannten Spritzgießformen.

Diese Aufgabe wird gemäß der Erfindung gelöst durch die im kennzeichnenden Teil des Patentanspruches 1 herausgestellten Merkmale.

Vorteilhafte Ausgestaltungen der Spritzgießform sind in den Unteransprüchen enthalten.

Bei der Spritzgießform gemäß der Erfindung bleiben die Formbacken frei von die Anlage der Kühlbohrungen behindernden Führungsbohrungen. Es wird ferner nur noch die halbe Anzahl von Führungssäulen benötigt. Weiter können die Formbacken quer zur Öffnungsrichtung der Spritzgießform schmaler gehalten werden, wodurch geringere Außenabmessungen der Form erreichbar sind. Eine weitere Vereinfachung der Spritzgießform wird durch die beanspruchte Ausbildung der kombinierten Führung der beiden Formteile und Betätigung des Auswerferrahmens erzielt. Insgesamt wird eine kurze Zykluszeit und damit ein einfach aufgebauter Schnelläufer erzielt.

Die Erfindung ist in der Zeichnung anhand eines Ausführungsbeispiels veranschaulicht und im nachstehenden beschrieben.

Es zeigen:

Fig. 1     eine Draufsicht auf den die Formbacken tragenden Teil einer Spritzgießform mit geschlossenen Formbacken.

Fig. 2   in größerem Maßstab eine Draufsicht auf eine Ecke,
         an der zwei benachbarte Formbacken gegeneinanderstoßen.

Fig. 3   einen Schnitt längs der Linie III-III in Fig. 2.

Fig. 4   einen Schnitt längs der Linie IV-IV in Fig. 1
         durch eine Ecke beider Teile der Spritzgießform
         in geschlossenem Zustand.

Fig. 5   einen Schnitt entsprechend dem Schnitt nach Fig. 4,
         jedoch bei geöffneter Form zum Zeitpunkt des Wirksamwerdens des Auswerferrahmens.

Fig. 6   im Ausschnitt einer Ecke einer Spritzgießform
         einen Schnitt längs der Linie I-I in Fig. 2.

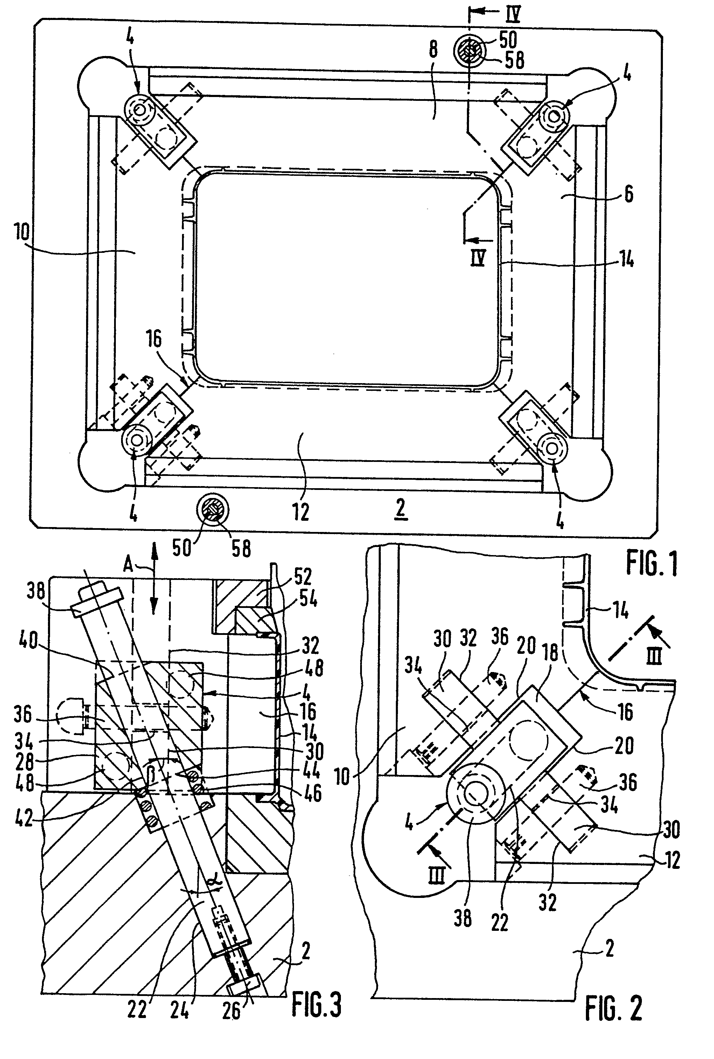

In Fig. 1 ist ein Formteil 2 einer Spritzgießform mit
einer Grundplatte dargestellt, auf der über vier an den
Ecken angeordnete Führungen 4 vier Formbacken 6 bis 12
angeordnet sind, deren Innenkontur die Außenseite eines
kastenförmigen Spritzlings begrenzt, beispielsweise die
Außenkontur eines Flaschenkastens 14. Die Innenkontur des
Flaschenkastens wird durch den Kern bzw. die Kerne bestimmt,
die am anderen Formteil 3 der Spritzgießform befestigt sind.
Die Innenkontur des Spritzlings 14 ist in der Zeichnung
nicht dargestellt. Einer der Formteile, hier der Formteil 2,
ist fest mit einem feststehenden Teil der Spritzgießmaschine
verbunden, während der andere Teil zum Öffnen der Form
beweglich angeordnet ist.

Die vier Formbacken liegen mit ihren Endflächen im Bereich
der Ecken des Spritzlings 14 unter einem Winkel entsprechend
dem halben Eckenwinkel, also bei einem Eckenwinkel von 90°

unter einem Winkel von 45°. An der Stoßstelle sind sie an den Spritzling angrenzend in bekannter Weise mit aneinanderstoßenden Dichtflächen 16 versehen. In Fortsetzung dieser Dichtflächen ist nach außen in den Endflächen der Formbacken eine Ausnehmung 18 angeordnet, die zwischen zwei hier im wesentlichen parallelen Flächen 20 ausgebildet ist, die parallel zu den Dichtflächen 16 der Formbacken liegen.

Innerhalb der Ausnehmung 18 ist eine Führungssäule 22 angeordnet, die in der Ebene der Stoßfuge, in der die Dichtflächen 16 liegen, nach außen geneigt ist. Diese Führungssäule 22 ist in einer schrägen Bohrung 24 in der Grundplatte des Formteils 2 gehaltert. Die Bohrung 24 ist als Sackbohrung ausgebildet und die Führungssäule 22 wird durch eine von unten durch die Grundplatte 2 geführte Schraube 26 gehaltert. Die Führungssäule 22 ist gegen die Senkrechte unter einem Winkel $\alpha$ geneigt, der sich unter Berücksichtigung der gewünschten Bewegungswinkel der Formbacken ergibt. Wenn der Neigungswinkel, unter dem sich die Formbacken relativ zur Grundplatte 2 bewegen, in üblicher Weise 30° betragen soll, beträgt der Neigungswinkel der Führungssäule 22 etwa 22°.

Auf der Führungssäule 22 ist ein Mitnehmer 28 in Achsrichtung der Führungssäule 22 verschiebbar. Dieser Mitnehmer weist bei dem dargestellten Ausführungsbeispiel seitliche Führungsnasen 30 auf, die in Nuten 32 in den Seitenflächen der Ausnehmung 18 eingreifen. Diese Nuten erstrecken sich im wesentlichen in Richtung der Öffnungs- und Schließbewegung der Form, die in Fig. 3 durch den Pfeil A angedeutet ist. Zweckmäßig ist der Winkel $\beta$ , unter dem die Seitenflächen der Nut 32 relativ zur Achse der Führungssäule 22 liegen, gleich dem Neigungswinkel $\alpha$ der Führungssäule relativ zur Grundplatte 2 im Schnitt III-III. Über die Mitnehmernasen 30 werden die Formbacken quer zur Öffnungs- bzw. Schließrichtung der Form geführt.

In den Mitnehmernasen 30 sind ferner horizontale Nuten 34
vorgesehen, in die horizontal angeordnete Mitnehmerbolzen
36 eingreifen, die von den Ecken der Formbacken aus parallel
zu den Flächen 20 in die Formbacken eingeschraubt sind. Über
die Nuten 34 und die Bolzen 36 werden in die Formbacken
Kräfte in Bewegungsrichtung eingeführt. Die Bewegung des
Mitnehmers 28 wird nach oben durch einen Anschlag 38 am Ende
der Führungssäule 22 begrenzt, gegen die eine Schrägfläche
40 auf der Oberseite des Mitnehmers zur Anlage kommt.

Auf der Unterseite des Mitnehmers ist gleichfalls eine quer
zur Achse der Bohrung 42 des Mitnehmers 28 liegende Anschlagfläche 44 vorgesehen, gegen die eine Feder 46 anliegt, über
die zu Beginn der Öffnungsbewegung eine Bewegung in die Formbacken eingeleitet wird, bevor der eigentliche Backenantrieb
einsetzt, für den in üblicher Weise Hydraulikzylinder vorgesehen sein können. Diese in der Zeichnung nicht dargestellten
Hydraulikzylinder können in üblicher Weise an den Formbacken
angreifen. Sie können aber auch an dem Mitnehmer 28 angreifen und über diesen Mitnehmer die Öffnungs- und Schließbewegung der Formbacken bewirken.

Anstelle der Mitnehmernasen 30 und der Mitnehmerbolzen 36
können auch senkrecht zur Neigungsebene durch die Formbacken
und den Mitnehmer geführte Bolzen vorgesehen werden. Derartige
Bolzen 48 sind in Fig. 3 gestrichelt dargestellt. Diese
Bolzen sind in den Formbackenenden axial verschiebbar und
übertragen die Öffnungskräfte in beiden Komponenten der
Bewegungsrichtung. Für derartige Bolzen können in den
Führungsbacken Kugelführungen vorgesehen werden. Ebenso können die Mitnehmer 28 mit Kugelführungen für die Führungssäule 22 versehen sein. Für den Einbau von Kugelführungen
steht hier ein ausreichendes Einbauvolumen zur Verfügung
bzw. kann quer zur Stoßfuge leicht vorgesehen werden. Der
Ausschnitt 18 kann ohne weiteres breiter als in der
Zeichnung dargestellt ausgeführt sein, und auch die Breite
des Mitnehmers in der Ebene kann größer gewählt sein als
in der Zeichnung dargestellt.

Durch die Anordnung der vier Führungssäulen in den Ecken
entfallen über die Länge der Formbacken Führungsbohrungen,
die die Disposition der Anlage von Kühlbohrungen beeinträchtigen. Die Formbacken können durch den Wegfall von
solchen Bohrungen für die Führungssäulen darüberhinaus
schmaler und damit mit kleinerer Masse ausgeführt sein,
woraus wiederum kleinere Abmessungen der Spritzgießform
resultieren, die es vielfach ermöglichen, derartige Formen
auf kleineren Spritzgußmaschinen und damit wirtschaftlicher
zu betreiben. Durch den Fortfall der Schrägbohrungen in den
Formbacken ist es weiter nicht mehr erforderlich, die gesamte
Spritzgießform im zusammengebauten Zustand auf einem Bohrwerk zu bearbeiten. Die Mitnehmer können als Normteile
relativ preisgünstig hergestellt werden.

Die beiden Teile 2 und 3 der Spritzgießform sind mittels
Führungssäulen 50 relativ zueinander geführt. In der Form
ist weiter ein Abstreiferrahmen 52 angeordnet, der in
Öffnungsrichtung verschiebbar ist und in seinen Ecken mit
einem Einsatz 54 versehen ist, der einen Teil der Formgravur
bildet und unter die Ecke des Randes des Spritzlings 14 greift,
wie im einzelnen aus Fig. 3, 4 und 5 ersichtlich.

Der Auswerferrahmen 52 ist mit Armen 56 versehen, mit denen er auf den Führungssäulen 50 geführt ist.

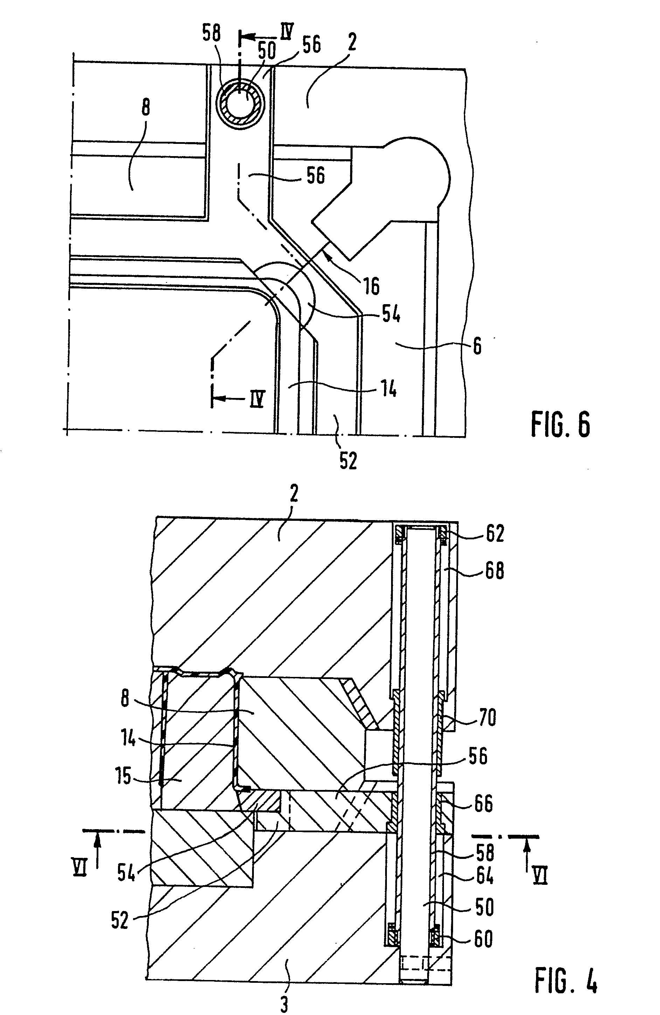

Die Führungssäule 50 ist, wie aus Fig. 4 ersichtlich, mit ihrem einen Ende in der Grundplatte 3 der einen, hier der beweglichen Formhälfte befestigt. Die Führungssäule 50 erstreckt sich bis in die andere, hier die feststehende Formhälfte-2, bei dem dargestellten Ausführungsbeispiel in der geschlossenen Stellung bis zu deren Rückseite. Auf der Führungssäule 50 ist eine Buchse 58 angeordnet, die sich im wesentlichen über die gesamte Länge der Führungssäule 50 erstreckt. An den beiden Enden der Buchse 58 sind Anschläge 60, 62 vorgesehen, die als aufgeschraubte Ringe ausgebildet und damit durch Verdrehen in ihrer Stellung veränderbar sein können. In der Grundplatte 3 der beweglichen Formhälfte ist eine Senkung 64 vorgesehen, in der sich der Anschlag 60 frei in Achsrichtung bewegen kann. Auf der Buchse 58 ist der Arm 56 des Mitnehmerrahmens 52 über eine Führungsbuchse 66 geführt.

In der Grundplatte der feststehenden Formhälfte ist gleichfalls eine Senkung 68 vorgesehen, in der sich der Anschlag 62 in axialer Richtung frei bewegen kann. Am Boden der Senkung 68 ist eine Führungsbuchse 70 vorgesehen, die auf der Buchse 58 geführt ist. Damit sind über die Buchse 58 auf der Führungssäule 50 sowohl der Auswerferrahmen 56 als auch der Formteil 2 axial verschiebbar gelagert.

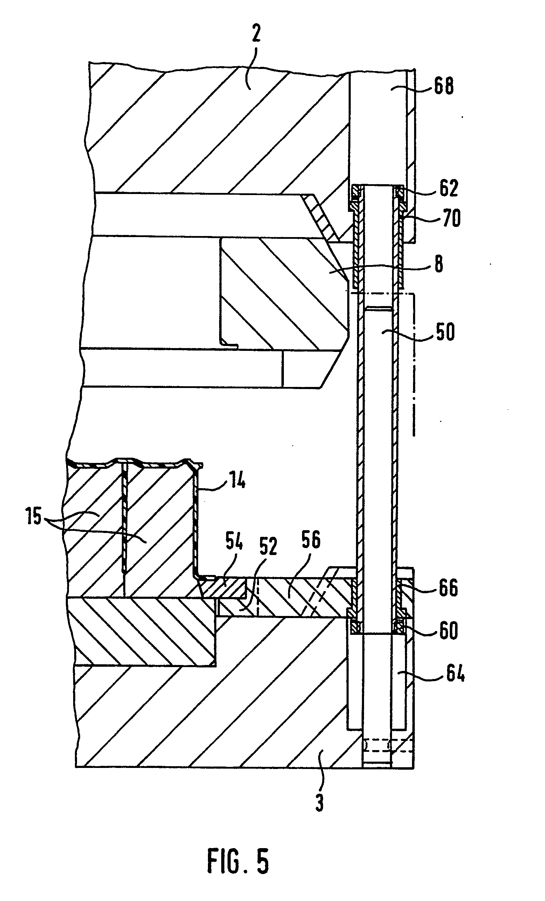

Nach Beendigung eines Spritzvorganges wird die Form dadurch geöffnet, daß der Formteil 3 von dem feststehenden Formteil 2 wegbewegt wird, und zwar in Achsrichtung der Führungssäulen 50. Dabei werden die äußeren Formbacken 42 in die geöffnete Stellung bewegt, wie aus Fig. 5 ersichtlich.

Der Auswerferrahmen 54 wird auf dem beweglichen Formteil mitgenommen bis die beiden Anschläge 60 und 62 an den angrenzenden Enden der Buchsen 66 bzw. 68 oder sonstigen für diesen Zweck vorgesehenen Anschlägen zur Anlage kommen. Der Auswerferrahmen wird damit relativ zum Formteil 2 festgehalten. Der Formteil 3 bewegt sich weiter. Dabei wird der Spritzling 14 von seinem an dem Formteil 3 befestigten Kern bzw. Kernen 15 abgestreift. Die Stellung, in der die Bewegung des Abstreiferrahmens 52 relativ zum Formteil 3 beginnt, ist in Fig. 5 wiedergegeben.

Wie aus Fig. 5 ersichtlich, ist die weitere Bewegung des beweglichen Formteiles nicht durch die zwischen dem feststehenden Formteil 2 und dem Abstreiferrahmen 52 wirksamen Anschläge 60, 62 behindert. Die Führungssäule 50 am Formteil 3 kann sich vielmehr axial innerhalb der Buchse 58 weiterbewegen, bis die am Formteil 3 befestigten Kerne vollständig aus dem Spritzling herausgezogen sind.

Für die Betätigung des Auswerferrahmens 52 sind keinerlei zusätzliche Steuerungen erforderlich. Es genügt vielmehr ein Auffahren der Form bis der Spritzling vom Kern abgestreift und abgefallen ist. Ist dieser Weg durchlaufen, kann die Maschine sofort auf Schließen umgeschaltet und ohne Betätigung zusätzlicher Schalter oder Steuermittel wieder zugefahren werden. Auf diese Weise lassen sich sehr kurze Zykluszeiten erzielen, und zwar insbesondere auch in Verbindung mit der oben beschriebenen Führung und Ausbildung der Formbacken, die in einfacher Weise die Anlage sehr wirksamer Kühlbohrungen und damit eine Reduzierung der Kühlzeit ermöglichen. Beide Maßnahmen zusammen ermöglichen den Bau ausgesprochener Schnelläufer, mit denen Produktionsleistungen von 120 Polyäthylen-Kästen/h bei einem Kastengewicht von 1200 g erreicht wurden.

A n s p r ü c h e

1. Spritzgießform für kastenförmige Spritzlinge, insbesondere
   Flaschenkästen, bei der die äußere Kontur der Spritzlinge
   formende Formbacken auf schrägen Führungssäulen, die an
   einer Formplatte angeordnet sind, verschiebbar geführt
   sind und bei der jeweils zwei benachbarte Formbacken in
   der Schließstellung an ihren benachbarten Ecken unter dem
   halben Eckenwinkel längs einer Dichtfläche aneinander anliegen, dadurch gekennzeichnet, daß in der Ebene der Dichtfläche (16) zweier benachbarter Formbacken (6; 8; 10; 12)
   um einen sich aus den Bewegungswinkeln der Formbacken (6;
   8, 10, 12) ergebenden resultierenden Winkel ($\alpha$) jeweils
   eine Führungssäule (22) an der bewegbaren Formplatte (2)
   geneigt angeordnet ist, auf der ein mit den beiden benachbarten Formbacken (6; 8; 10; 12) in Eingriff stehender
   gemeinsamer Mitnehmer (28) verschiebbar geführt ist.

2. Spritzgießform nach Patentanspruch 1, dadurch gekennzeichnet,
   daß jeder Mitnehmer (28) im wesentlichen quaderförmig
   ausgebildet ist, seitliche, sich senkrecht zur Neigungsebene der zugehörigen Führungssäule (22) erstreckende
   Führungsnasen (30) aufweist, die in in Öffnungsrichtung
   der Spritzgießform verlaufenden Nuten (32) in den benachbarten Stirnseiten (Flächen 20) der Formbacken (6; 8; 10; 12)
   eingreifen, und daß für die Führungsnasen (30) im wesentlichen
   in Öffnungsrichtung wirksame Mitnehmerbolzen (36) in oder
   an den Formbacken (6; 8; 10; 12) angeordnet sind.

3. Spritzgießform nach Patentanspruch 1, dadurch gekennzeichnet,
   daß jeder Mitnehmer (28) und jeder Formbacken (6; 8; 10; 12)
   wenigstens eine senkrecht zur Neigungsebene der zugehörigen
   Führungssäule (22) verlaufende Bohrung aufweist, in der
   jeweils ein Mitnehmerbolzen (48) angeordnet ist.

4. Spritzgießform nach einem der vorhergehenden Patentansprüche, dadurch gekennzeichnet, daß zwischen dem
Mitnehmer (28) und der bewegbaren Formplatte (2) um jede
Führungssäule (22) herum eine Druckfeder (46) angeordnet
ist.

5. Spritzgießform nach einem der vorhergehenden Patentansprüche, bei der an dem verschiebbaren Formteil ein
Abstreiferrahmen vorgesehen ist, mit dem nach dem Öffnen
der Formteile der Spritzling vom Kern an dem beweglichen
Formteil abstreifbar ist, dadurch gekennzeichnet, daß
der Auswerferrahmen (52) wenigstens von zwei Führungssäulen (50) durchdrungen ist, die in einem der beiden Formteile (3) befestigt sind und sich in Öffnungsrichtung der
Form erstrecken, daß auf den Führungssäulen (50) jeweils
axial verschiebbare Buchsen (58) gelagert sind, auf deren
Außenseite der Abstreiferrahmen (52) und der andere Formteil
(2) axial verschiebbar gelagert und radial geführt sind,
und daß die Buchse mit Anschlägen (60,62) versehen ist, die
mit dem Auswerferrahmen einerseits und dem anderen Formteil
andererseits zusammenwirken, wobei der wirksame Abstand
der Anschläge so gewählt ist, daß der Auswerferrahmen beim
Öffnen der Form arretiert wird, sobald eine für das Auswerfen des Spritzlings erforderliche Öffnungsweite erreicht
ist.

6. Spritzgießform nach Anspruch 5, dadurch gekennzeichnet, daß
der Auswerferrahmen (52) mit Armen (56) versehen ist, mit
denen er auf der Buchse (58) gelagert ist.

7. Spritzgießform nach Anspruch 5, dadurch gekennzeichnet, daß
als Anschläge auf der Buchse (58) ringförmige Widerlager
(60,62) angeordnet sind.

8. Spritzgießform nach Anspruch 7, <u>dadurch gekennzeichnet</u>, daß die Anschläge (60,62) über Gewinde in Achsrichtung einstellbar sind.

1/3

0061072

FIG.1

FIG.3

FIG. 2

0061072

FIG. 6

FIG. 4

FIG. 5